# EUROPEAN PATENT APPLICATION

(11) **EP 4 415 311 A1**
(43) Date of publication of application: **14.08.2024**
(21) Application number: 23155284.5
(22) Date of filing: 07.02.2023
(51) Int. Cl.: H04L 9/40, H04L 67/303, G06F 21/55, G06F 21/56

(54) **MALWARE ATTACK VECTOR IDENTIFICATION**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A malware response system is disclosed. The malware response system comprises a malware detection module configured to identify a plurality of malware-infected devices in a computer network; and an attribute analysis module configured to receive sets of infected device attributes, calculate a frequency value for each attribute in the sets of infected device attributes, and select the attribute having a greatest respective frequency value as a candidate attack vector.

## Description

### FIELD OF THE INVENTION

The present disclosure relates to the identification of malware attack vectors in computer networks.

### BACKGROUND

When a malware outbreak occurs on a computer network, it can be difficult to determine how the malware spreads between devices. Knowing how the malware propagates is crucial in order for correct mitigating actions to be enacted.

Most existing malware detection methods attempt to match known malware to detected outbreaks. However, these methods are ill-suited at detecting, and responding to, malware that has not been seen before or that makes use of zero-day vulnerabilities.

There is therefore a need for improved methods of responding to potentially unknown strains of malware.

### SUMMARY OF THE INVENTION

According to a first aspect, there is provided a malware response system comprising: a malware detection module configured to identify a plurality of malware-infected devices in a computer network (i.e. infected with the same strain of malware); and an attribute analysis module configured to: receive sets of infected device attributes, each set of infected device attributes comprising attributes of a respective malware-infected device of the plurality of malware-infected devices; calculate a frequency value for each attribute in the sets of infected device attributes; and select the attribute having a greatest (i.e. largest/maximal) respective frequency value as a candidate attack vector.

An attack vector (also known as a threat vector) is a pathway or method used by malware to infect a device and spread within a computer network.

The attributes may be any quality/characteristic of the devices. Example attributes include operating system type and version, hardware details, open ports, user accounts, installed and/or running software etc.

The frequency value represents how frequently the attribute occurs. The frequency value may be an absolute frequency (e.g. the number of times the attribute occurs) or some derivative thereof (i.e. it may be based on the absolute frequency, e.g. normalised or otherwise processed in some way), or it may be a relative frequency (e.g. a ratio of the absolute frequency of the device attribute in the sets of infected device attributes compared to the frequency of the respective device attribute in uninfected devices or all devices in the computer network).

The malware response system may further comprise a malware mitigation module configured to: (i) apply mitigative action to at least one device in the computer network so as to mitigate exploitation of the candidate attack vector.

The mitigative action may be any action suitable for preventing malware from further exploiting the candidate attack vector, e.g. patching the operating system, closing a port, disabling an application, updating a device driver, disconnecting a device from the network etc.

Applying mitigative action may comprise: identifying, by the malware mitigation module, one or more devices in the computer network that have an attribute matching the candidate attack vector; and applying, by the malware mitigation module, the mitigative action to at least one of the identified devices that have the attribute matching the candidate attack vector so as to mitigate exploitation of the candidate attack vector.

Alternatively, the mitigative action may be applied to devices (e.g. all devices) regardless of their attributes. For example, if the candidate attack vector relates to open port 22, all devices in the network may be instructed to close port 22.

The malware response system may further comprise an infection analysis module configured to: (ii) define a treatment group and a control group in the computer network (each of the treatment group and control group comprising at least one device), wherein the mitigative action is only applied to devices in the treatment group; (iii) subsequent to applying the mitigative action, calculate a malware infection rate for each of the treatment group and the control group; and (iv) if the malware infection rate is lower for the treatment group (i.e. by a statistically significant amount), cause the malware mitigation module to apply the mitigative action to devices in the control group, otherwise cause the attribute analysis to select a new candidate attack vector (e.g. the attribute having the next-greatest respective frequency value) and optionally cause the malware mitigation module to repeat step (i) and the infection analysis module to repeat steps (ii)-(iv).

Additional treatment groups may optionally be defined, and multiple candidate attack vectors may be considered. In this case, the mitigative action applied to each treatment group will generally be different.

Calculating the frequency value may comprise: determining, by the attribute analysis module, a total number of occurrences of each attribute in the sets of infected device attributes; and setting, by the attribute analysis module, the frequency value for each respective attribute based on the total number of occurrences of the respective attribute.

The frequency value may be set equal to the total number of occurrences, or it may alternatively be otherwise based on (e.g. derived from) the total number of occurrences - for example, it may be in some way normalised, or it may be combined with other values. One skilled in the art will appreciate that there are numerous ways in which the total number of occurrences could be processed when calculating the frequency value.

The attribute analysis module may be further configured to, prior to determining the total number of occurrences of each attribute in the sets of infected device attributes, receive additional sets of device attributes comprising device attributes of uninfected devices in the computer network and identify attributes that are common to all devices in the computer network, wherein the attributes that are common to all devices in the computer network are disregarded when determining the total number of occurrences of each attribute in the sets of infected device attributes.

Some attributes may be ubiquitous throughout all devices in the network. For example, there might be a network where all devices have the same administrator user account. Such attributes would therefore occur most frequently in the set of attributes even though they are likely to be unrelated to the actual attack vector. While this could be confirmed through the use of control and treatment groups as described above, it will generally be more expedient to disregard these attributes calculating the frequency value.

Calculating the frequency value may alternatively comprise: determining, by the attribute analysis module, a first total number of occurrences for each attribute in the set of infected device attributes; receiving, by the attribute analysis module, additional sets of device attributes comprising device attributes of uninfected devices in the computer network; for each respective attribute in the set of infected device attributes, determining, by the attribute analysis module, a second total number of occurrences for the respective attribute in the additional sets of devices attributes; and setting, by the attribute analysis module, the frequency value for each respective attribute based on a ratio or a difference between the first total number of occurrences of the respective attribute and the second total number of occurrences of the respective attribute.

Calculating the frequency value based on a ratio or difference between the first and second total number of occurrences provides an indication of the relative frequency of each attribute and therefore accounts for attributes that are expected to be more common (e.g. nearly all devices in a computer network may run the same operating system, which could lead to the operating system being selected as the candidate attack vector even where is it not the source of the vulnerability). The ratio could be calculated by dividing the first total number of occurrences by the second total number of occurrences. The difference could be calculated by subtracting the second total number of occurrences from the first total number of occurrences (this may result in negative values). The actual value of the ratio or difference may be used as the frequency value, or some derivative of the ratio or difference may be used instead (e.g. the ratio or difference may be used as inputs to a function for calculating the actual frequency value).

The additional sets of device attributes may further comprise device attributes of infected devices in the computer network (i.e. the additional sets of device attributes could comprise the device attributes for all devices in the network).

According to a second aspect, there is provided a computer-implemented malware response method comprising: identifying a plurality of malware-infected devices in a computer network (i.e. infected with the same strain of malware); receiving sets of infected device attributes, each set of infected device attributes comprising attributes of a respective malware-infected device of the plurality of malware-infected devices; calculating a frequency value for each attribute in the sets of infected device attributes; and selecting the attribute having a greatest respective frequency value as a candidate attack vector.

The method of the second aspect corresponds to the method performed by the malware response system of the first aspect and provides the same benefits.

The method may further comprise: (i) applying mitigative action to at least one device in the computer network so as to mitigate exploitation of the candidate attack vector.

Applying mitigative action may comprise: identifying one or more devices in the computer network that have an attribute matching the candidate attack vector; and applying the mitigative action to at least one of the identified devices that have the attribute matching the candidate attack vector so as to mitigate exploitation of the candidate attack vector.

The method may further comprise: (ii) defining a treatment group and a control group in the computer network (each of the treatment group and control group comprising at least one device), wherein the mitigative action is only applied to devices in the treatment group; (iii) subsequent to applying the mitigative action, calculating a malware infection rate for each of the treatment group and the control group; and (iv) if the malware infection rate is lower for the treatment group (i.e. by a statistically significant amount), applying the mitigative action to devices in the control group, otherwise selecting a new candidate attack vector (e.g. the attribute having the next-greatest respective frequency value) and optionally repeating steps (i)-(iv).

Calculating the frequency value may comprise: determining a total number of occurrences of each attribute in the sets of infected device attributes; and setting the frequency value for each respective attribute based on total number of occurrences of the respective attribute.

The method may further comprise, prior to determining the total number of occurrences of each attribute in the sets of infected device attributes, receiving additional sets of device attributes comprising device attributes of uninfected devices in the computer network and identifying attributes that are common to all devices in the computer network, wherein the attributes that are common to all devices in the computer network are disregarded when determining the total number of occurrences of each attribute in the sets of infected device attributes.

Calculating the frequency value may alternatively comprise: determining a first total number of occurrences for each attribute in the set of infected device attributes; receiving additional sets of device attributes comprising device attributes of uninfected devices in the computer network; for each respective attribute in the set of infected device attributes, determining a second total number of occurrences for the respective attribute in the additional sets of devices attributes; and setting the frequency value for each respective attribute based on a ratio or a difference between the first total number of occurrences of the respective attribute and the second total number of occurrences of the respective attribute.

The additional sets of device attributes may further comprise device attributes of infected devices in the computer network (i.e. the additional sets of device attributes could comprise the device attributes for all devices in the network).

According to a third aspect, there is provided a computer program comprising instructions which, when executed by a computer, cause the computer to carry out the steps of the second aspect.

According to a fourth aspect, there is provided a computer readable carrier medium comprising the computer program of the third aspect.

### BRIEF DESCRIPTION OF THE FIGURES

Aspects of the present disclosure will now be described by way of example with reference to the accompanying figures, in which:
Figure 1 is a schematic of a data processing apparatus;
Figure 2 is a schematic of a malware response system; and
Figure 3 is a flowchart of a method for identifying malware attack vectors.

### DETAILED DESCRIPTION

Malware outbreaks typically occur in any one node on a computer network. The origin of the intrusion can be varied, for example it may be (among other possibilities) through an outside connection (typically through the internet), through an internal malicious actor, or through a phishing campaign targeting a member of the network administration.

For malware to propagate between devices, there are certain required attributes that make devices susceptible to being infected. Such attributes can include (among others) the operating system that the target device is running, open ports, vulnerable applications running on the device, vulnerable hardware etc. However, there are typically only one or a few attack vectors that malware uses to propagate from device to device. As such, for any malware to propagate through a network there is often a common feature/attribute that most of, if not all of, the infected devices share.

The present invention provides a system and method for determining attack vectors even when dealing with previously unknown strains of malware.

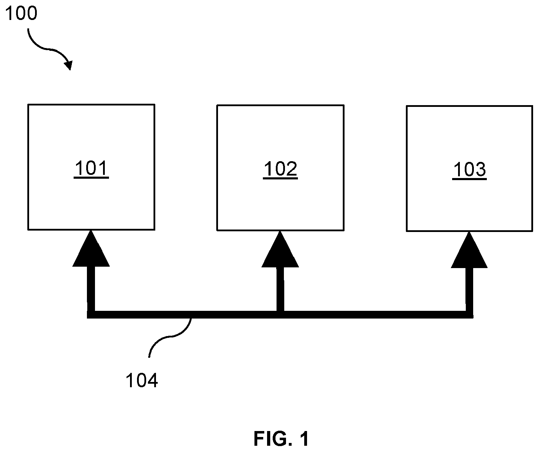

Figure 1 schematically illustrates an exemplary data processing apparatus 100 capable of performing any of the methods described herein. It comprises a processor 101 operably coupled to both a memory 102 and an interface (I/O) 103 via a bus 104.

The memory 102 may optionally comprise computer program instructions which, when the program is executed by the processor 101, cause the data processing apparatus 100 to carry out any of the methods described herein. Alternatively or additionally, the interface 103 can optionally comprise one or both of a physical interface configured to receive a data carrier having such instructions stored thereon and a receiver configured to receive a data carrier signal carrying such instructions.

The receiver, when present, can be configured to receive messages. It can comprise one or more wireless receiver modules and/or one or more wired receiver modules. The interface 103 can optionally comprise a transmitter configured to transmit messages. The transmitter, when present, can comprise one or more wireless transmitter modules and/or one or more wired transmitter modules.

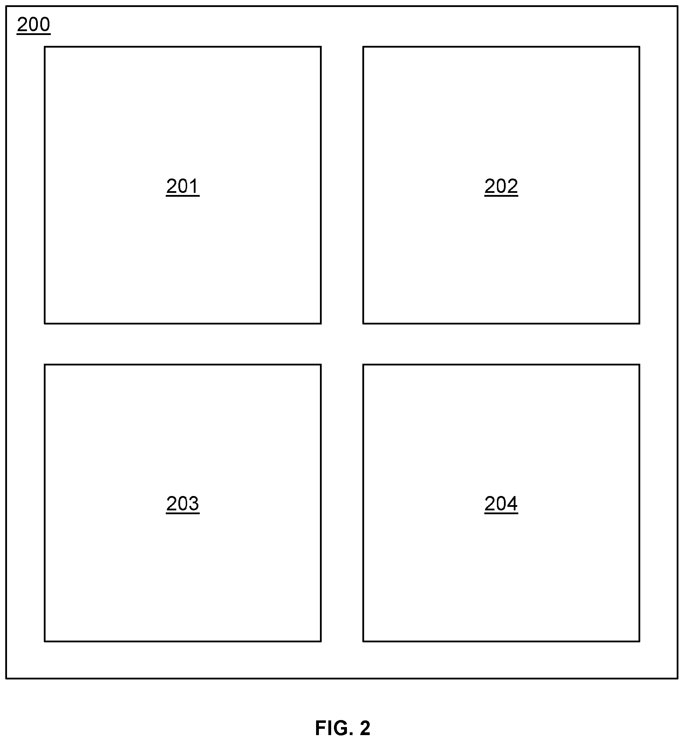

A schematic of an exemplary malware response system 200 is shown in Figure 2. The malware response system 200 may optionally be implemented using a data processing apparatus such as the data processing apparatus 100 shown in Figure 1.

The malware response system 200 comprises a malware detection module 201, an attribute analysis module 202, a malware mitigation module 203, and an infection analysis module 204. It should be understood that alternative labels could be used for modules that perform corresponding functions to the illustrated modules, and that the functions of two or more of the illustrated modules could optionally be combined into a single module. In addition, it should be understood that additional or fewer modules could be used. For example the malware mitigation module 203 and infection analysis module 204 are optional and could be omitted, and the functionality of the malware detection module 201 and the attribute analysis module 202 could be combined into a single module or split across additional modules.

Each module of the malware response system may be implemented in software, or one or more of the modules may be implemented in dedicated hardware. For example, the processor 101 may have separate cores dedicated to one or more of the modules, or multiple or virtual processors may be used.

The malware detection module 201 is configured to identify malware-infected devices in a computer network. The malware detection module 201 may identify infected devices using any suitable malware detection method. For example, the malware detection module 201 may monitor network traffic and the identification may be based on the detection of unusual network traffic associated with the device in question, or the malware detection module 201 may monitor files and applications in storage and memory on devices in the network and may identify malware based on a positive malware detection at the device (e.g. using signature based methods, machine learning methods, heuristic methods etc.).

Details (e.g. in the form of a list or similar data structure) of the infected devices are provided to the attribute analysis module 202, including a set of attributes associated with each infected device (i.e. the details provided to the attribute analysis module 202 include sets of infected device attributes). The function of the attribute analysis module 202 is to receive attributes for devices in the network and analyse (i.e. processes) these received attributes to infer which attributes are associated with the propagation of malware within the computer network.

The attributes could be any quality/characteristic of the respective device. Examples of attributes include (but are not limited to) operating system (both version and type, e.g. Windows/MacOS/Linux/Android/iOS etc.), software installed and/or running on the device (e.g. SQL servers, Apache servers, office applications etc.), open ports, hardware details (e.g. CPU model, GPU model, peripherals etc.), driver versions, user accounts etc. An illustrative example of such attributes is given in Table I for five infected devices labelled A-E.

**Table I: example device attributes**

| **Device** | **Operating system** | **Open ports** | **Running applications** |
|---|---|---|---|
| **A** | Windows | 80 | Apache |
| **B** | Windows | 22, 80 | Apache |
| **C** | Linux | 22, 35, 45 | Nginx |
| **D** | Linux | 22, 32 | Nodejs |
| **E** | MacOS | 22, 98 | Illustrator |

Having received the sets of device attributes, the attribute analysis module 202 then proceeds to calculate frequency values for each attribute and identify the attribute in the sets of device attributes that has the highest frequency value (e.g. this could be the most common shared attribute).

The frequency value may be taken as the actual frequency with which each attribute occurs (i.e. the number of occurrences of the attribute in the sets of infected device attributes), or it may be a ratio or difference between the actual frequency of the attribute and the frequency of the same attribute in uninfected/all devices in the network.

Using the example in Table I, the frequency of each attribute can be calculated as shown in Table II (Table II has been truncated to only include the six most frequent attributes).

**Table II: example attribute frequencies**

| **Attribute** | **Frequency** |
|---|---|
| **Port 22 open** | 0.8 |
| **Windows operating system** | 0.4 |
| **Linux operating system** | 0.4 |
| **Port 80 open** | 0.4 |
| **Running Apache** | 0.4 |
| **Mac operating system** | 0.2 |

A single common attribute shared between most or all of the infected devices provides a strong indication of an attack vector being exploited by the malware. Out of the five infected devices, four of them share a common link in port 22 being open (a frequency/rate of 0.8, which is used as the frequency value in this example). Without knowing any additional information about the machines or the malware, this suggests that the malware may be spreading through the computer network by exploiting a vulnerability associated with the use of port 22. The infection of machine A, which does not have port 22 open, could be explained by one or more of the following (non-exhaustive) scenarios:
1. It may have been the origin of the malware infection and was thus infected through other means (e.g. social engineering, phishing, etc.).
2. It might have been infected through port 22, and port 22 may subsequently have been closed.
3. The vulnerability might be present in the underlying use of port 22. For example, the vulnerability might be in the use of SSH which normally uses port 22, but might be utilising a different port in the case of device A.
4. The malware may also exploit a second malware attack vector. In the case of multiple attack vectors, it may be possible to identify the second vector by identifying additional shared attributes that could be potential secondary attack vectors (e.g. both machine A and machine B share all other data points - both run Windows and Apache, and both have port 80 open).

Having identified an attribute in the sets of device attributes with the greatest/largest/maximal frequency value, the attribute analysis module 202 selects the identified attribute as a candidate attack vector exploited by the malware.

Once the attribute analysis module 202 has selected the candidate attack vector (e.g. open port 22 in the present example), the malware mitigation module 203 can proceed to identify devices in the computer network that have an attribute matching the candidate attack vector (i.e. have port 22 open) and apply mitigative action to one or more of these identified devices (i.e. disabling/closing port 22). Alternatively, mitigating action could be applied to all devices in the network without first identifying only the vulnerable devices (e.g. all devices in the network could be instructed to close port 22 regardless of whether it is currently open).

The function of the malware mitigation module 203 is to instigate configuration and software updates in the computer network in response to the malware. It should be understood that the specific action to be taken will depend upon the candidate attack vector in question, and one skilled in the art will be able to determine suitable actions without undue burden using known methods (e.g. rule-based methods, machine learning methods, etc.).

Additional confidence that the candidate attack vector is correct can be gained by using the infection analysis module 204 to monitor the effect of the mitigating action. The function of the infection analysis module 204 is to obtain and process metrics relating to the spread of malware within the computer network. For example, the infection analysis module 204 can define a treatment group and a control group in the computer network and apply the mitigative action only to devices in the treatment group. These groups should ideally be relatively similar (i.e. each group should be representative of the network as a whole) in order to facilitate isolation of the effect of the mitigative action. The groups could be created in numerous ways, such as community detection and clustering algorithms (e.g. minimum cut, Girvan-Newman, K-means), a priori user defined groups, or random selection; community detection and clustering algorithms are generally preferred due to the dynamic nature of network states during a malware outbreak.

When treatment and control groups are formed, they should preferably be roughly equal in the three following aspects:
1. The different groups should have a similar number of devices and connections between devices.
2. The different groups should have a similar ratio of infected to susceptible devices.
3. The distribution of the data point being tested should be similar across both groups (in the present example, the control group should not contain only machines that already have port 22 disabled).

The infection analysis module 204 then proceeds to calculate a malware infection rate for each of the control group and the treatment group (i.e. the proportion of susceptible devices that become infected). If the treatment group exhibits a lower rate of infection than the control group, this increases the confidence that the candidate attack vector (e.g. port 22 being open) is being exploited by the malware; in this case the infection analysis module 204 can cause the malware mitigation module 203 to apply the mitigative action to devices in the control group in order to mitigate further spread of the malware.

If the treatment group does not exhibit a statistically significant lower rate of infection, the candidate attack vector can be discarded and the infection analysis module 204 can cause the attribute analysis module 202 to identify another attribute in the sets of device attributes having the next greatest/largest frequency value (the sets of device attributes could optionally be updated by the attribute analysis module 202 at this stage to account for any new infections, e.g. as detected by the malware detection module 201 and/or infection analysis module 204). The other attribute can then be selected by the attribute analysis module 202 as a new candidate attack vector, and the steps performed by the malware mitigation module 203 and/or infection analysis module 204 can optionally be repeated (i.e. further mitigative action can be applied based on the new candidate attack vector, and the infection analysis module 204 could define new control and treatment groups to ascertain whether this new mitigative action reduces the infection rate in the treatment group compared to the control group).

While the above example uses two groups (treatment and control), it should be understood that additional treatment groups could be used with different mitigative actions applied to each treatment group. Such an approach could potentially expedite identification of the correct attack vector in the case where there are multiple potential attack vectors. When using multiple treatment groups, these should preferably be roughly equal to the control group and to each other in the three aspects described above.

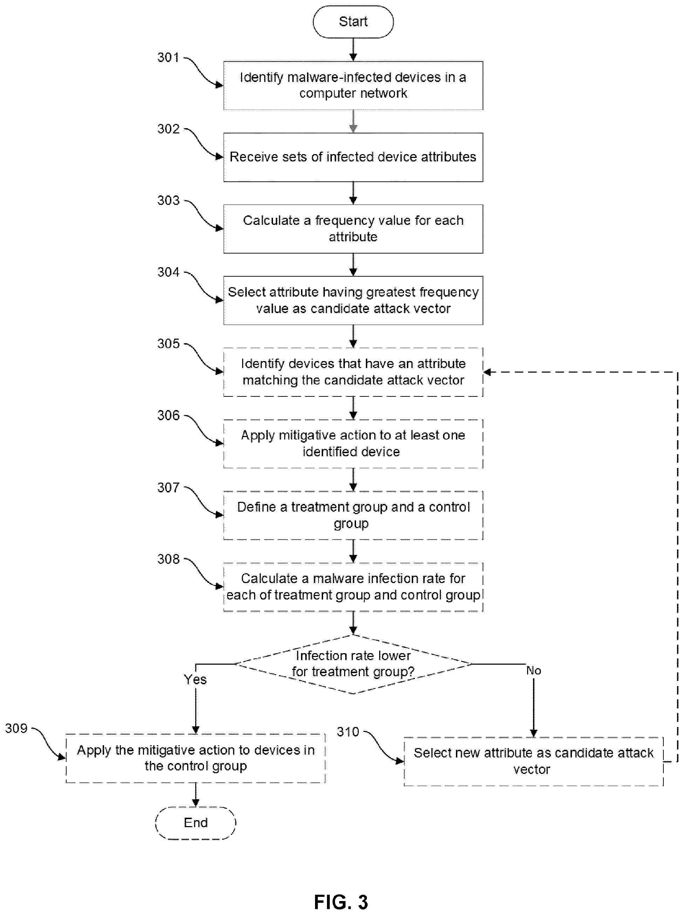

Figure 3 illustrates method steps for identifying malware attack vectors. In step 301, a plurality of malware-infected devices is identified in a computer network. In step 302, sets of infected device attributes are received/obtained, each set of infected device attributes comprising attributes of a respective malware-infected device of the plurality of malware-infected devices. In step 303, a frequency value for each attribute in the sets of infected device attributes is calculated. In step 304, the attribute having the greatest respective frequency value is selected as a candidate attack vector. In optional step 305, devices in the computer network are identified that have an attribute matching the candidate attack vector. In optional step 306, mitigative action is applied to at least one of the devices identified during step 305 so as to mitigate (further) exploitation of the candidate attack vector. In optional step 307, a treatment group and a control group are defined in the computer network, wherein the mitigative action is only applied to devices in the treatment group. In optional step 308, a malware infection rate is calculated for each of the treatment group and the control group subsequent to applying the mitigative action. If the malware infection rate is lower for the treatment group, the method can proceed to optional step 309 in which the mitigative action is also applied to devices in the control group. If the malware infection rate is not lower for the treatment group, the method can proceed to optional step 310 in which a new attribute (e.g. the attribute having the next-greatest respective frequency value) is selected as the candidate attack vector. Following step 310, the method may optionally return to step 305.

The preceding description is presented to enable any person skilled in the art to make and use the system and perform the method of the invention and is provided in the context of a particular application. Various modifications to the disclosed examples will be readily apparent to those skilled in the art. It is intended that the specification be considered as exemplary only.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claims. That is, the operations/steps may be performed in any technically feasible order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

User devices can include, without limitation, static user devices such as PCs and mobile user devices such as smartphones, tablets, laptops and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation, microphones, buttons, keypads, touchscreens, touchpads, trackballs, joysticks, mice, gesture control devices and brain control (e.g. electroencephalography, EEG) devices. User output devices can include, without limitation, speakers, buzzers, display screens, projectors, indicator lights, haptic feedback devices and refreshable braille displays. User interface devices can comprise one or more user input devices, one or more user output devices, or both.

## Claims

1. A malware response system comprising:
a malware detection module configured to identify a plurality of malware-infected devices in a computer network; and
an attribute analysis module configured to:
receive sets of infected device attributes, each set of infected device attributes comprising attributes of a respective malware-infected device of the plurality of malware-infected devices;
calculate a frequency value for each attribute in the sets of infected device attributes; and
select the attribute having a greatest respective frequency value as a candidate attack vector.

2. The malware response system of claim 1, further comprising a malware mitigation module configured to:
(i) apply mitigative action to at least one device in the computer network so as to mitigate exploitation of the candidate attack vector.

3. The malware response system of claim 2, wherein applying mitigative action comprises:
identifying, by the malware mitigation module, one or more devices in the computer network that have an attribute matching the candidate attack vector; and
applying, by the malware mitigation module, the mitigative action to at least one of the identified devices that have the attribute matching the candidate attack vector so as to mitigate exploitation of the candidate attack vector.

4. The malware response system of claim 2 or claim 3, further comprising an infection analysis module configured to:
(ii) define a treatment group and a control group in the computer network, each of the treatment group and control group comprising at least one device, wherein the mitigative action is only applied to devices in the treatment group;
(iii) subsequent to applying the mitigative action, calculate a malware infection rate for each of the treatment group and the control group; and
(iv) if the malware infection rate is lower for the treatment group, cause the malware mitigation module to apply the mitigative action to devices in the control group, otherwise cause the attribute analysis to select a new candidate attack vector and optionally cause the malware mitigation module to repeat step (i) and/or the infection analysis module to repeat steps (ii)-(iv).

5. The malware response system of any preceding claim, wherein calculating the frequency value comprises:
determining, by the attribute analysis module, a total number of occurrences of each attribute in the sets of infected device attributes; and
setting, by the attribute analysis module, the frequency value for each respective attribute based on the total number of occurrences of the respective attribute.

6. The malware response system of claim 5, wherein the attribute analysis module is further configured to:
prior to determining the total number of occurrences of each attribute in the sets of infected device attributes, receive additional sets of device attributes comprising device attributes of uninfected devices in the computer network and identify attributes that are common to all devices in the computer network, wherein the attributes that are common to all devices in the computer network are disregarded when determining the total number of occurrences of each attribute in the sets of infected device attributes.

7. The malware response system of any of claims 1 to 5, wherein calculating the frequency value comprises:
determining, by the attribute analysis module, a first total number of occurrences for each attribute in the set of infected device attributes;
receiving, by the attribute analysis module, additional sets of device attributes comprising device attributes of uninfected devices in the computer network;
for each respective attribute in the set of infected device attributes, determining, by the attribute analysis module, a second total number of occurrences for the respective attribute in the additional sets of devices attributes; and
setting, by the attribute analysis module, the frequency value for each respective attribute based on a ratio or a difference between the first total number of occurrences of the respective attribute and the second total number of occurrences of the respective attribute.

8. A computer-implemented malware response method comprising:
identifying a plurality of malware-infected devices in a computer network;
receiving sets of infected device attributes, each set of infected device attributes comprising attributes of a respective malware-infected device of the plurality of malware-infected devices;
calculating a frequency value for each attribute in the sets of infected device attributes; and
selecting the attribute having a greatest respective frequency value as a candidate attack vector.

9. The method of claim 8, further comprising:
(i) applying mitigative action to at least one device in the computer network so as to mitigate exploitation of the candidate attack vector.

10. The method of claim 9, wherein applying mitigative action comprises:
Identifying one or more devices in the computer network that have an attribute matching the candidate attack vector; and
applying the mitigative action to at least one of the identified devices that have the attribute matching the candidate attack vector so as to mitigate exploitation of the candidate attack vector.

11. The method of claim 9 or claim 10, further comprising:
(ii) defining a treatment group and a control group in the computer network, each of the treatment group and control group comprising at least one device, wherein the mitigative action is only applied to devices in the treatment group;
(iii) subsequent to applying the mitigative action, calculating a malware infection rate for each of the treatment group and the control group;
(iv) if the malware infection rate is lower for the treatment group, applying the mitigative action to devices in the control group, otherwise selecting a new candidate attack vector and optionally repeating steps (i)-(iv).

12. The method of any of claims 8 to 11, wherein calculating the frequency value comprises:
determining a total number of occurrences of each attribute in the sets of infected device attributes; and
setting the frequency value for each respective attribute based on the total number of occurrences of the respective attribute,
wherein the method optionally further comprising, prior to determining the total number of occurrences of each attribute in the sets of infected device attributes, receiving additional sets of device attributes comprising device attributes of uninfected devices in the computer network and identifying attributes that are common to all devices in the computer network, optionally wherein the attributes that are common to all devices in the computer network are disregarded when determining the total number of occurrences of each attribute in the sets of infected device attributes.

13. The method of any of claims 8 to 11, wherein calculating the frequency value comprises:
determining a first total number of occurrences for each attribute in the set of infected device attributes;
receiving additional sets of device attributes comprising device attributes of uninfected devices in the computer network;
for each respective attribute in the set of infected device attributes, determining a second total number of occurrences for the respective attribute in the additional sets of devices attributes; and
setting the frequency value for each respective attribute based on a ratio or a difference between the first total number of occurrences of the respective attribute and the second total number of occurrences of the respective attribute.

14. A computer program comprising instructions which, when executed by a computer, cause the computer to carry out the steps of any of claims 8 to 13.

15. A computer readable carrier medium comprising the computer program of claim 14.
